# NEUE EUROPÄISCHE PATENTSCHRIFT

(11) **EP 2 409 862 B2**
(45) Veröffentlichungstag und Bekanntmachung des Hinweises auf die Entscheidung über den Einspruch: **01.03.2017**
(45) Hinweis auf die Patenterteilung: 15.01.2014
(21) Anmeldenummer: 11164026.4
(22) Anmeldetag: 28.04.2011
(51) Int. Cl.: B60G 7/00, B60G 17/00

(54) **Querlenker**
Transverse control arm
Bras oscillant transversal

(30) Priorität: 21.07.2010 DE 102010031891
(43) Veröffentlichungstag der Anmeldung: 25.01.2012
(73) Patentinhaber: Benteler Automobiltechnik GmbH, 33104 Paderborn (DE)
(72) Erfinder: Mielke, Oliver, 33184 Altenbeken (DE); Ebbing, Tobias, 33161 Hövelhof (DE); Hessing, Florian, 80809 München (DE)
(74) Vertreter: Ksoll, Peter

(56) Entgegenhaltungen:
- EP-A1- 1 619 054
- EP-A1- 1 619 055
- DE-A1- 10 024 225
- DE-A1-102007 018 569
- JP-A- 2002 219 918

## Beschreibung

Die vorliegende Erfindung betrifft einen Querlenker eines Kraftfahrzeuges mit den Merkmalen gemäß dem Oberbegriff des Patentanspruchs 1.

Im Kraftfahrzeugbau dienen Querlenker für die Führung und Lenkung der Räder. Der Querlenker stellt auf der einen Seite die Verbindung mit der Lageranordnung des Rades und auf der anderen Seite die Verbindung mit dem Chassis des Fahrzeugs her. Die Lageranordnung umfasst neben dem Radlager und der Antriebswelle unter anderem auch ein Schwenklager, eine Verbindung mit dem Achsschenkel und mit einem Führungsgelenk, mit der Spurstange sowie weiterer Elemente für die Lenkung, den Antrieb, die Federung und die Bremse des Fahrzeugs.

Im Betrieb des Fahrzeugs ist der Querlenker vielseitigen Beanspruchungen ausgesetzt. Oft sind deshalb pro Rad auch mehr als ein Querlenker vorgesehen. Der hohen Beanspruchung des Querlenkers kann mit einer besonders festen und stabilen Konstruktion begegnet werden. Eine solche Konstruktion bringt jedoch oft auch ein hohes Gewicht mit sich, was zu erhöhtem Treibstoffverbrauch führt.

Eine gewichtsoptimierte Gestaltung ist durch Werkstoffe besonders hoher Festigkeit oder die Kombination unterschiedlicher Werkstoffe möglich. Insbesondere die hochbelasteten Lageranbindungsbereiche können aus Gussteilen oder Fräsbauteilen bestehen, die mit einem Grundkörper aus Stahlblech verbunden werden. Die Hybridbauweise hat allerdings den Nachteil, dass die einzelnen Bauteile miteinander gefügt werden müssen, was sich nachteilig auf die Produktionskosten auswirkt.

Insbesondere die Dauerhaltbarkeit eines Querlenkers, und somit die Sicherheit des Fahrzeugs, ist ein weiterer wesentlicher Punkt, der bei der Konstruktion und Auslegung eines Querlenkers zu berücksichtigen ist. Verbindungsbereiche zwischen verschiedenen Komponenten eines Hybridquerlenkers müssen besonders sorgfältig gestaltet werden.

Aus der DE 10 2007 018 569 A1 ist ein Fahrwerkslenker für ein Kraftfahrzeug bekannt, der einen Sechskantzapfen aufweist und an einem Blecharm in einer Tülle ausläuft, die den Zapfen mit einem Umschließungswinkel von mindestens 270° umschließt und mit dem Zapfen stoffschlüssig verbunden ist. Die Produzierbarkeit einer rundverlaufenden Schweißnaht ist jedoch nur bedingt einfach ausführbar.

Aus der DE 100 24 225 A1 ist ein Querlenker bekannt, der als einschaliges Blechbauteil ausgebildet ist, wobei zwei Blechschalen thermisch miteinander gefügt sind. Ferner weist der Querlenker einen Lagerzapfen auf, der mittels einer Lochschweißung mit diesem gekoppelt ist.

Weiterhin ist aus der EP 1 619 054 A1 ein Querlenker bekannt, der durch eine umformtechnische Bearbeitung als geschlossenes Hohlprofil ausgebildet wird, wobei ein Lagerzapfen formschlüssig umgriffen ist und optional zusätzlich thermisch mit dem Hohlprofil gefügt wird.

Ferner sind aus der JP 2002 219 918 A sowie der EP 1 619 055 A1 Querlenker bekannt, die umformtechnisch bearbeitet sind und als Schweißbauteile ausgebildet werden.

Aufgabe der vorliegenden Erfindung ist es daher, einen Querlenker zur Verfügung zu stellen, der eine hohe Festigkeit, ein geringes Gewicht und eine besonders einfache Produzierbarkeit bei gleichzeitiger hoher Dauerhaltbarkeit aufweist.

Die vorgenannte Aufgabe wird mit einem Querlenker mit den Merkmalen des Patentanspruchs 1 gelöst.

Vorteilhafte Ausgestaltungen und Weiterbildungen des grundsätzlichen Erfindungsgedankens sind Gegenstand der abhängigen Patentansprüche.

Der Querlenker, welcher einstückig aus einer Blechplatine hergestellt ist, besitzt einen Grundkörperbereich mit daran ausgebildeten Lagerbereichen. In einem Lagerbereich ist ein Lagerzapfen mittels stoffschlüssiger Verbindung angeordnet. Erfindungsgemäß ist die stoffschlüssige Verbindung in Richtung einer Längsachse des Lagerzapfens orientiert ist.

Der Lagerzapfen ist in Bezug auf seine Längsachse zumindest mit einem Abschnitt auf bzw. in dem Lagerbereich angeordnet. Eine stoffschlüssige Verbindung ist im Rahmen der Erfindung eine Verbindung, die durch thermisches Fügen hergestellt ist. Hierunter ist beispielsweise eine Fügenaht wie eine durchgehende oder unterbrochene Schweißnaht oder aber auch eine Aneinanderreihung von Punktschweißungen zu verstehen. Die Ausrichtung der stoffschlüssigen Verbindung erfolgt dabei in Richtung der Längsachse des Lagerzapfens. Die Anordnung der stoffschlüssigen Verbindung bietet im Rahmen der Erfindung insbesondere den Vorteil, dass alle im Fahrwerk auftretenden Kräfte und Momente sicher übertragen werden, bei gleichzeitiger hoher Dauerhaltbarkeit der Koppelung zwischen Lagerzapfen und Grundkörper. Die zu übertragenden Kräfte und Momente liegen im Bereich von wenigen 100 bis zu mehreren 1000 Nm. Insbesondere können Lasten von mehr als 50 kN übertragen werden.

Für den Querlenker werden bevorzugt Stahlwerkstoffe eingesetzt. Es ist jedoch auch möglich, Leichtmetallwerkstoffe einzusetzen. Auch wäre es im Rahmen der Erfindung vorstellbar, einen Hybridquerlenker aus zwei voneinander verschiedenen Werkstoffen herzustellen. Die stoffschlüssige Verbindung kann dabei im Rahmen der Erfindung dann auch eine Klebenaht sein. Im Allgemeinen werden die Bauteile aus Blechplatinen mit einer Wandstärke zwischen 1 und 6 mm, bevorzugt zwischen 2 und 4,75 mm hergestellt. Im Falle von Blechbauteilen ist es im Rahmen der Erfindung auch vorstellbar, dass die Blechbauteile mittels Warmumformen und Presshärten hergestellt sind. Auch ist es im Rahmen der Erfindung vorstellbar, dass die Lagerbereiche, speziell der Lagerbereich, in dem der Lagerzapfen angeordnet ist, zumindestens partiell wärmebehandelt bzw. vergütet wird.

Der Lagerzapfen ist im Allgemeinen als Stahlbauteil ausgebildet. Insbesondere ist er als Kaltfließpressteil hergestellt. Der Durchmesser des Lagerzapfens liegt zwischen 5 und 50 mm, bevorzugt zwischen 10 und 40 mm. Es ist auch vorstellbar, den Lagerzapfen als Rohrbauteil auszubilden, oder aber auch als Leichtmetallbauteil.

An dem Lagerbereich sind durch umformtechnische Herstellung zwei Flansche ausgebildet, wobei an beiden Flanschen die stoffschlüssige Verbindung ausgebildet ist. Im Rahmen der Erfindung ist unter einem Flansch ein Teilbereich des Lagerabschnittes zu verstehen, der einstückig mit dem Lagerbereich respektive mit dem Grundkörperbereich hergestellt ist und von diesem aus insbesondere nahtlos übergeht.

Für die stoffschlüssige Verbindung zwischen Flansch und Lagerzapfen wird im Rahmen der Erfindung ein Schweißverfahren beispielsweise ein MIG oder aber MAG Schweißverfahren eingesetzt. Die Verbindung kann aber auch über WIG-Schweißen, E-Hand-Schweißen, Laser-Schweißen, Laser-Hybrid-Schweißen oder aber Reibrühr-Schweißen hergestellt werden. Auch ist es vorstellbar, die stoffschlüssige Verbindung mittels Widerstandsschweißen herzustellen. Die stoffschlüssige Verbindung wird weiterhin mit und/oder Zusatzwerkstoff hergestellt. Sie hat eine Ausdehnung bzw. Breite beispielsweise in Form einer Fügenaht oder aber in Form von Punktschweißungen, die zwischen 0,1 und 10 mm, bevorzugt zwischen 0,2 und 5 mm liegt.

Erfindungsgemäß ist ein Flansch als Stützflansch und ein anderer Flansch als Entlastungsflansch ausgebildet. Der Stützflansch hat dabei primär die Funktion, die auftretenden Kräfte, von Lagerzapfen zu Querlenker oder aber von Querlenker zu Lagerzapfen zu übertragen. Dem Entlastungsflansch kommt primär eine zusätzliche Stützfunktion zugute. Im Rahmen der Erfindung tritt durch die Orientierung der stoffschlüssigen Verbindung in Längsrichtung des Lagerzapfens ein Moment auf, da zwischen der Längsachse des Lagerzapfens und der stoffschlüssigen Verbindung ein Abstand vorhanden ist. Die Kraft am Lagerzapfen greift bei Freischnitt grundsätzlich in der Mitte des Lagerzapfens an. Folglich entsteht ein Biegemoment um die Achse der stoffschlüssigen Verbindung. Dieses Biegemoment wird durch die stoffschlüssige Verbindung des Lagerzapfens mit dem Entlastungsflansch herabgesetzt.

In der stoffschlüssigen Verbindung entstehen somit Spannungen bzw. Spannungsspitzen. Über den Entlastungsflansch ist es dadurch möglich, die auftretenden Spannungen zu minimieren. Der Entlastungsflansch ist dabei vorzugsweise mit einem Abstand zum Stützflansch besonders bevorzugt auf der gegenüberliegenden Seite der Längsachse des Lagerzapfens angeordnet. Er muss allerdings nicht auf einer Geraden, die von Lagerzapfenlängsachse und stoffschlüssiger Verbindungsachse bestimmt ist liegen, sondern sollte in einem anderen Viertel oder Halbabschnitt des Lagerzapfens liegen.

Der Lagerzapfen weist einen Koppelabschnitt auf, wobei der Koppelabschnitt zumindest abschnittsweise mit dem Stützflansch und dem Entlastungsflansch stoffschlüssig verbunden ist. Die stoffschlüssige Koppelung mit dem Stützflansch und dem Entlastungsflansch, zumindest auf einem Abschnitt des Koppelabschnittes des Lagerzapfens, bietet insbesondere den Vorteil eine besonders langlebige Verbindung zwischen dem Lagerzapfen und dem Grundkörper des Querlenkers zu schaffen.

In einer weiteren bevorzugten Ausführungsvariante weist der Entlastungsflansch an seinem Ende einen Kragen auf, wobei der Kragen zumindest abschnittsweise in Längsrichtung des Lagerzapfens ausgebildet ist. Der Kragen erstreckt sich dabei besonders bevorzugt über den gesamten Bereich des Entlastungsflansches und ist zumindest abschnittsweise, vorzugsweise über den gesamten Abschnitt des Koppelabschnittes, ausgebildet.

Der Kragen am Entlastungsflansch bietet insbesondere die Möglichkeit, den Spannungsverlauf gleichmäßig zu verteilen, sodass Spannungsspitzen im Übergangsbereich bzw. im Koppelungsbereich von Entlastungsflansch und Koppelabschnitt minimiert bzw. herabgesetzt werden. Eine bessere Dauerhaltbarkeit und eine geringere Anfälligkeit gegenüber durch Dauerschwingungen verursache Rißbildung stellen sich ein. In der Folge werden Ermüdungsbrüche somit weitestgehend vermieden.

In einer weiteren besonders bevorzugten Ausführungsvariante ist der Kragen vom Lagerzapfen wegweisend orientiert umgestellt. Hierbei werden Spannungen von ca. 200 bis 800 MPa, insbesondere von 300 bis 700 MPa besonders vorteilhaft übertragen. Der Kragen bzw. der Endabschnitt des Kragens sind dabei vom Lagerzapfen wegweisend orientiert. Der Kragen ist an dem Entlastungsflansch dazu vorzugsweise mit einem Biegeradius zwischen 1 und 30 mm abgebogen. Ausgehend von der ursprünglichen Ausrichtung kann er in einem Winkel zwischen 1 und 180°, bevorzugt zwischen 50 und 150° umgebogen sein. Der Kragen verfügt dabei über eine Länge zwischen 1 und 100 mm. Er weist eine Breite von ca. 1 bis 30 mm auf.

Der Lagerbereich ist im Querschnitt im Wesentlichen C-förmig konfiguriert und kommt an dem Koppelabschnitt zumindest bereichsweise zur Anlage. Der Lagerbereich weist im Querschnitt eine wesentliche C-förmige Konfiguration auf, wobei an die C-förmige Konfiguration bzw. an die Enden der Schenkel der C-förmigen Konfiguration die Flansche angrenzen. Insgesamt ergibt sich somit eine dem Lagerzapfen umschließende Konfiguration des Lagerbereiches mit den Flanschen.

Durch die bereichsweise Anlage mit dem Koppelabschnitt ergibt sich zusätzlich eine höhere Festigkeit, was sich wiederum besonders vorteilig auf die Höhe der zu übertragenden Kräfte und auf die Dauerhaltbarkeit auswirkt. In einer weiteren bevorzugten Ausführungsvariante ist ein Hohlraum zwischen dem Stützflansch und dem Koppelabschnitt ausgebildet. Der Hohlraum bietet eine bessere Möglichkeit, den Lagerzapfen während des Produktionsprozesses in den Querlenker einzubringen bzw. einzupressen. Weiterhin bietet der Hohlraum einen Entlastungsraum, der sich wiederum besonders vorteilig auf die herzustellende stoffschlüssige Verbindung auswirkt. Dehnungen der Wärmeeinflusszone werden hierdurch kompensiert.

Vorzugsweise sind der Stützflansch und der Kragen im Wesentlichen in die gleiche Richtung orientiert. Im Bezug auf den Kraftfluss und auch auf den Spannungsverlauf wirkt sich dies wiederum vorteilig auf die hergestellte Verbindung zwischen Lagerzapfen und Querlenker sowie auf die Dauerhaltbarkeit aus.

Weiterhin kommt der Stützflansch mit einer Stirnfläche an dem Koppelabschnitt zur Anlage. Hierdurch ist sichergestellt, dass zwischen dem Stützflansch und dem Koppelabschnitt eine stoffschlüssige Verbindung, insbesondere eine Schweißverbindung produktionssicher bei geringem Ausschuss hergestellt wird.

Weitere Vorteile, Merkmale, Aspekte und Eigenschaften der vorliegenden Erfindung ergeben sich aus der folgenden Beschreibung, bevorzugte Ausführungsform anhand der schematischen Zeichnung. Dieses dient dem einfachen Verständnis der Erfindung. Es zeigen:
- Figur 1: einen erfindungsgemäßen Querlenker in einer Unteransicht,
- Figur 2: einen erfindungsgemäßen Querlenker in einer perspektivischen Ansicht,
- Figur 3: einen erfindungsgemäßen Lagerbereich in einer Frontansicht,
- Figur 4: einen erfindungsgemäßen Lagerbereich in einer perspektivischen Unteransicht,
- Figur 5: einen erfindungsgemäßen Lagerbereich in einer Frontansicht mit eingestecktem Lagerzapfen und
- Figur 6: einen erfindungsgemäßen Lagerbereich in einer perspektivischen Unteransicht mit eingestecktem Lagerzapfen.

In den Figuren werden für gleiche oder ähnliche Teile dieselben Bezugszeichen verwendet, wobei entsprechende oder vergleichbare Vorteile erreicht werden, auch wenn eine wiederholte Beschreibung aus Vereinfachungsgründen entfällt.

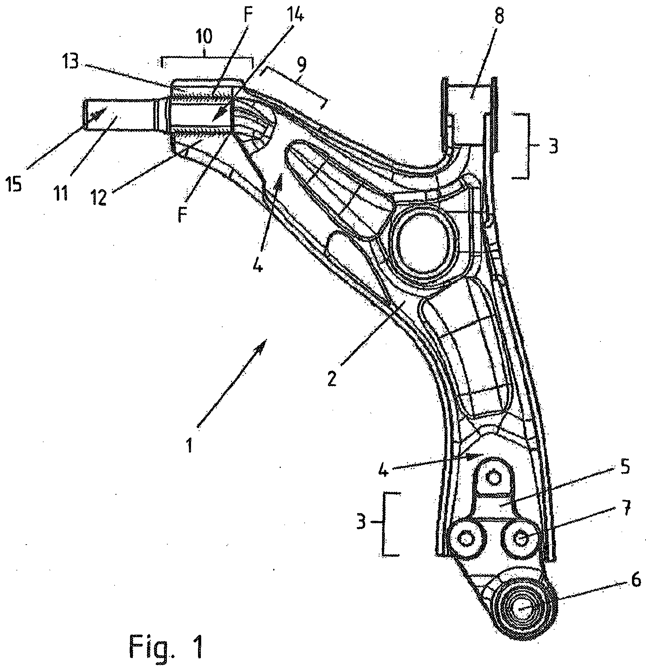

Figur 1 zeigt einen erfindungsgemäßen Querlenker 1 in einer Draufsicht. Der Querlenker 1 weist einen Grundkörperbereich 2 mit daran ausgebildeten Lagerbereichen 3, 10 auf. Der Querlenker 1 hat in diesem Ausführungsbeispiel eine im Wesentlichen L-förmige Konfiguration und der Grundkörperbereich 2 teilt sich wiederum in zwei Schenkelbereiche 4 auf.

Der Lagerbereich 3, bezogen auf die Bildebene in einem unteren Abschnitt, weist eine Anbindung 5 für ein Kugelgelenk 6 auf. Die Koppelung erfolgt dabei formschlüssig über Koppelmittel 7. In einem auf die Bildebene bezogenen oberen rechten Abschnitt weist der Querlenker 1 einen Lagerbereich 3 mit einer Lagerhülse 8 auf. Die Lagerhülse 8 ist dabei bevorzugt stoffschlüssig an den Lagerbereich 3 gekoppelt.

Der auf die Bildebene bezogene linke Schenkelbereich 4 erstreckt sich über einen trichterförmigen Übergangsbereich 9 in den Lagerbereich 10 zur Koppelung mit einem Lagerzapfen 11. In dem Lagerbereich 10 sind ein Stützflansch 12 und ein Entlastungsflansch 13 ausgebildet. Der Stützflansch 12 und auch der Entlastungsflansch 13 liegen jeweils an einem Koppelabschnitt 14 des Lagerzapfens 11 an.

Zwischen dem Koppelabschnitt 14 und dem Stützflansch 12 und auch dem Koppelabschnitt 14 und dem Entlastungsflansch 13 ist im Rahmen der Erfindung, jeweils stoffschlüssige Verbindungen in Form einer Fügenaht F ausgebildet. Der Lagerzapfen 11 erstreckt sich von dem Koppelabschnitt 14 kegelstumpfförmig zu einem Zapfenabschnitt 15.

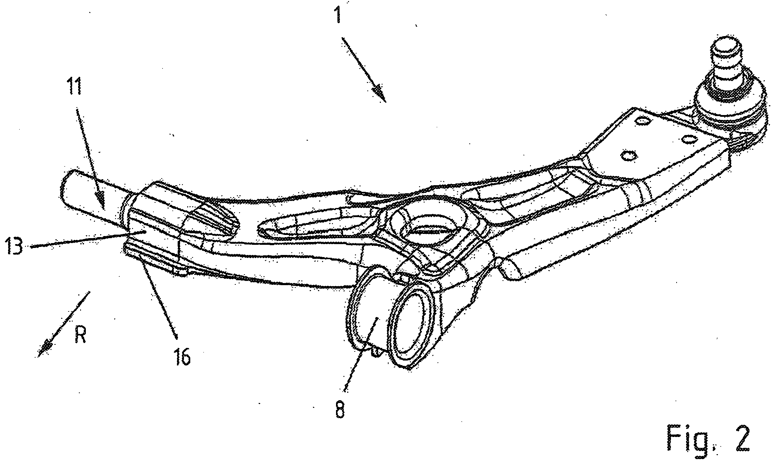

Figur 2 zeigt eine perspektivische Ansicht des erfindungsgemäßen Querlenkers 1. Hierbei ist zu erkennen, dass im Bereich des Entlastungsflansches 13 ein Kragen 16 ausgebildet ist. Der Kragen 16 zeigt dabei in die Richtung R weg von dem Lagerzapfen 11.

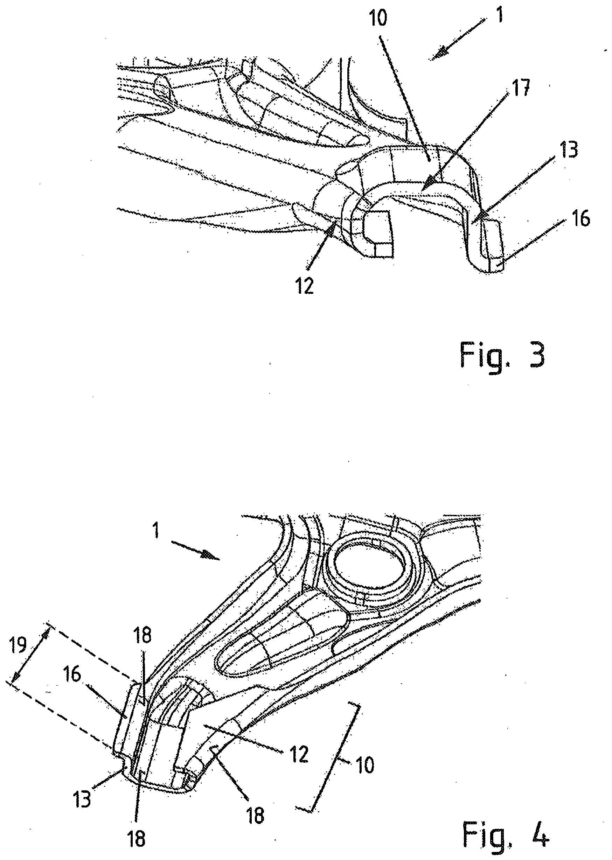

Figur 3 zeigt eine weitere stirnseitige Ansicht eines erfindungsgemäßen Querlenkers 1 mit Fokus auf den Lagerbereich 10 zur Koppelung eines hier nicht näher dargestellten Lagerzapfens 11. Hierbei ist zu erkennen, dass sich der Lagerbereich 10 in eine im Wesentlichen im Querschnitt und auch in einer Stirnansicht C-förmig konfigurierten Grundbereich 17 mit daran ausgebildeten Flanschen in Form des Stützflansches 12 und des Entlastungsflansches 13 aufteilt. Der Entlastungsflansch 13 hat dabei noch einen nach außen umgestellten Kragen 16.

Figur 4 zeigt eine weitere perspektivische Ansicht des erfindungsgemäßen Querlenkers 1 mit Fokus auf den Lagerbereich 10. In dem Lagerbereich 3 sind durch Umformung der Stützflansch 12 und auch der Entlastungsflansch 13 ausgebildet. Der Stützflansch 12 grenzt mit einer Biegung 18 an den Grundbereich an, der Entlastungsflansch 13 ebenfalls. Weiterhin erstreckt sich mit einer Biegung 18 ein Kragen 16 über den Koppelbereich 19 des Lagerbereiches 10.

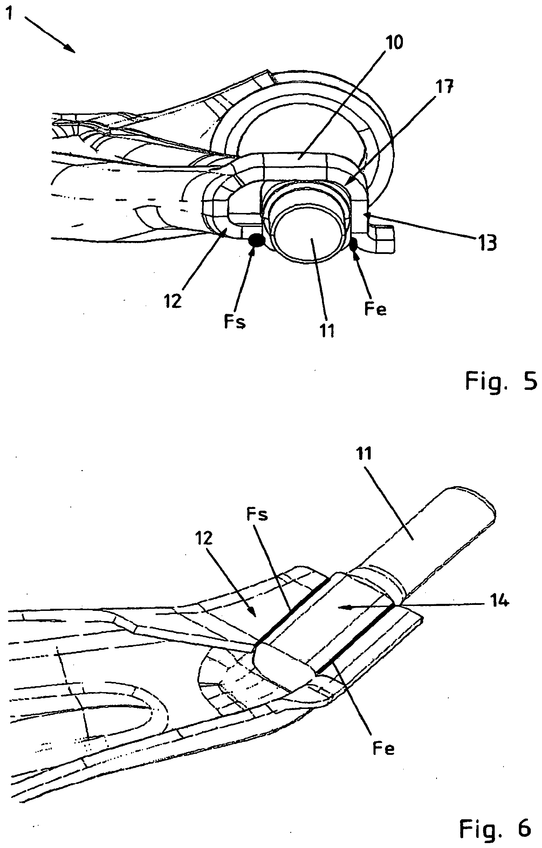

Figur 5 zeigt die stirnseitige Ansicht eines erfindungsgemäßen Querlenkers 1 gemäß Figur 3, mit dem Unterschied, dass der Lagerzapfen 11 hier mit eingesteckt ist. Der Lagerzapfen 11 kommt bezogen auf die Bildebene im oberseitigen Lagerbereich 10 zur formschlüssigen Anlage innerhalb des C-förmigen Grundbereichs 17. Er ist an dem Stützflansch 12 und an dem Entlastungsflansch 13 jeweils mit einer Fügenaht F gekoppelt. Die Fügenaht Fs am Stützflansch 12 ist dabei stärker ausgebildet, als die Fügenaht Fe am Entlastungsflansch 13.

Figur 6 zeigt die perspektivische Ansicht des Lagerbereiches 10 von unten mit eingesetztem Lagerzapfen 11. Hierbei ist ebenfalls gezeigt, dass die Fügenaht F des Stützflansches durchgängig im Koppelabschnitt 14 des Lagerzapfens 11 ausgebildet ist. Ebenfalls die Fügenaht Fe des Entlastungsflansches ist durchgängig im Koppelabschnitt 14 des Lagerzapfens 11 ausgebildet.

## Patentansprüche

1. Querlenker eines Kraftfahrzeuges, welcher einstückig aus einer Blechplatine hergestellt ist, wobei der Querlenker (1) einen Grundkörperbereich (2) mit daran ausgebildeten Lagerbereichen (3, 10) besitzt und in einem Lagerbereich (10) ein Lagerzapfen (11) mittels stoffschlüssiger Verbindung angeordnet ist und die stoffschlüssige Verbindung in Richtung einer Längsachse des Lagerzapfens (11) orientiert ist und der Lagerzapfen (11) einen Koppelabschnitt (14) aufweist und zur Koppelung von Lagerzapfen (11) und Lagerbereich (10) zwei Flansche ausgebildet sind, wobei ein Flansch als Stützflansch (12) und ein anderer Flansch als Entlastungsflansch (13) ausgebildet ist, und der Koppelabschnitt (14) zumindest abschnittsweise mit dem Stützflansch (12) und mit dem Entlastungsflansch (13) stoffschlüssig verbunden ist, **dadurch gekennzeichnet, dass** der Lagerbereich (10) im Querschnitt im Wesentlichen C-förmig konfiguriert ist und an dem Koppelabschnitt (14) zumindest bereichsweise zur Anlage kommt und dass der Stützflansch (12) mit einer Stirnfläche an dem Koppelabschnitt (14) zur Anlage kommt.

2. Querlenker nach Anspruch 1, **dadurch gekennzeichnet, dass** der Entlastungsflansch (13) an seinem Ende einen Kragen (16) aufweist, wobei der Kragen (16) zumindest abschnittsweise in Längsrichtung des Lagerzapfens (11) ausgebildet ist.

3. Querlenker nach Anspruch 2, **dadurch gekennzeichnet, dass** der Kragen (16) vom Lagerzapfen (11) wegweisend orientiert umgestellt ist.

4. Querlenker nach einem der Ansprüche 1 bis 3, **dadurch gekennzeichnet, dass** ein Hohlraum zwischen dem Stützflansch (12) und dem Koppelabschnitt (14) ausgebildet ist.

5. Querlenker nach einem der Ansprüche 2 bis 4, **dadurch gekennzeichnet, dass** der Kragen (16) und der Stützflansch (12) im Wesentlichen in die gleiche Richtung orientiert sind.

## Claims

1. Transverse control arm of a motor vehicle, which is manufactured in one piece from a sheet metal plate, wherein the transverse control arm (1) has a base region (2) with bearing regions (3, 10) formed thereon and a journal (11) is arranged in one bearing region (10) by a material connection and the material connection is oriented in the direction of a longitudinal axis of the journal (11) and the journal (11) has a coupling portion (14), and that two flanges are formed for coupling the journal (11) and bearing region (10), one flange being configured as a support flange (12) and another flange being configured as a relief flange (13), and the coupling portion (14) is materially connected, at least in sections, to the support flange (12) and to the relief flange (13), **characterised in that** the bearing region (10) is configured to be substantially C-shaped in cross-section and bears at least partially on the coupling portion (14) and that the support flange (12) bears with an end face on the coupling portion (14).

2. Transverse control arm according to claim 1, **characterised in that** the relief flange (13) has a collar (16) at its end, the collar (16) being formed at least in sections in the longitudinal direction of the journal (11).

3. Transverse control arm according to claim 2, **characterised in that** the orientation of the collar (16) is altered so that it faces away from the journal (11).

4. Transverse control arm according to one of claims 1 to 4, **characterised in that** a cavity is formed between the support flange (12) and the coupling portion (14).

5. Transverse control arm according to one of claims 2 to 5, **characterised in that** the collar (16) and the support flange (12) are oriented substantially in the same direction.

## Revendications

1. Bras oscillant transversal d'un véhicule automobile, qui est fabriqué d'un seul tenant dans un flan en tôle, dans lequel le bras oscillant transversal (1) possède une zone de corps de base (2) avec des zones de paliers (3, 10) qui y sont formées et un tourillon (11) est agencé dans une zone de palier (10) au moyen d'une liaison par adhérence et la liaison par adhérence est orientée dans la direction d'un axe longitudinal du tourillon (11) et le tourillon (11) présente une section de couplage (14), et que deux brides sont formées pour coupler le tourillon (11) et la zone de palier (10), dans lequel une bride se présente sous la forme d'une bride d'appui (12) et une autre bride sous la forme d'une bride d'équilibrage (13) et la section de couplage (14) est reliée par adhérence au moins par sections à la bride d'appui (12) et à la bride d'équilibrage (13), **caractérisé en ce que** la zone de palier (10) est configurée sensiblement en forme de C en coupe transversale et s'appuie au moins par zones sur la section de couplage (14) et que la bride d'appui (12) s'appuie sur la section de couplage (14) via une face avant.

2. Bras oscillant transversal selon la revendication 1, **caractérisé en ce que** la bride d'équilibrage (13) présente à son extrémité une collerette (16), dans lequel la collerette (16) est conformée au moins en sections dans la direction longitudinale du tourillon (11).

3. Bras oscillant transversal selon la revendication 2, **caractérisé en ce que** la collerette (16) est ajustée pour être orientée à l'opposé du tourillon (11).

4. Bras oscillant transversal selon l'une quelconque des revendications 1 à 4, **caractérisé en ce qu'**un espace creux est formé entre la bride d'appui (12) et la section de couplage (14).

5. Bras oscillant transversal selon l'une quelconque des revendications 2 à 5, **caractérisé en ce que** la collerette (16) et la bride d'appui (12) sont orientées sensiblement dans la même direction.
